# EUROPEAN PATENT APPLICATION

(11) **EP 4 407 258 A1**
(43) Date of publication of application: **31.07.2024**
(21) Application number: 21962434.3
(22) Date of filing: 28.10.2021
(51) Int. Cl.: F25D 11/00, F25D 19/00, B60P 3/20

(54) **TRANSPORT REFRIGERATION UNIT**

(71) Applicant: MITSUBISHI HEAVY INDUSTRIES THERMAL SYSTEMS, LTD., Tokyo 100-8332 (JP)
(72) Inventor: PIAO, Hailong, Tokyo 100-8332 (JP); JINNO, Hiroki, Tokyo 100-8332 (JP); DHARAMSHI, Kewal, Tokyo 100-8332 (JP); MATSUMOTO, Kyohei, Tokyo 100-8332 (JP)
(74) Representative: Cabinet Beau de Loménie
(86) International application number: PCT/JP2021/039902
(87) International publication number: WO 2023/073888

(57) **Abstract**

This transport refrigeration unit comprises: a casing that has a back-surface plate fixed to the front surface of a trailer; an electrical box that is provided inside the casing and in which electrical components are accommodated; a first fixing part that fixes the electrical box to the back-surface plate; and a second fixing part that fixes the electrical box to the casing more forward than the back-surface plate.

## Description

### Technical Field

The present disclosure relates to a transport refrigeration unit.

### Background Art

PTL 1 discloses a refrigeration unit provided in a refrigerated vehicle that tows a trailer. The refrigeration unit includes a control box (electric box) that is mounted to a front panel of a front wall of the trailer and that accommodates various electrical components such as a control board, and a box body (casing) that covers the control box from the outside. The box body accommodates heavy objects such as a compressor and an outdoor heat exchanger, in addition to the control box.

In addition, an outside air intake port (suction port) is formed in the box body. An outdoor heat exchange fan (fan) for introducing outside air to the outdoor heat exchanger is provided between the outside air intake port and the outdoor heat exchanger.

### Citation List

### Patent Literature

[PTL 1] Japanese Unexamined Patent Application Publication No. 2019-177857

### Summary of Invention

### Technical Problem

However, in a container refrigeration device disclosed in PTL 1, there is a case where it is not possible to secure a sufficient strength to support the heavy object accommodated in the casing.

In addition, the container refrigeration device disclosed in PTL 1 does not disclose in detail a discharge port for discharging the air that has passed through the outdoor heat exchanger to the outside of the casing. For this reason, depending on a forming location of the discharge port, there is a case where a flow of the air that has passed through the outdoor heat exchanger is hindered by various devices in the casing. That is, a pressure loss of the air flowing inside the casing increases, and there is a room for improvement in terms of the improvement of cooling performance of the outdoor heat exchanger.

The present disclosure has been made to solve the above problems, and an object thereof is to provide a transport refrigeration unit capable of improving a strength of the casing.

The present disclosure has been made to solve the above problems, and an object thereof is to provide a transport refrigeration unit capable of improving the cooling performance of the outdoor heat exchanger.

### Solution to Problem

In order to solve the above problems, a transport refrigeration unit according to the present disclosure includes a casing having a back plate fixed to a front surface of a trailer; an electric box provided inside the casing and accommodating electrical components; a first fixing portion fixing the electric box to the back plate; and a second fixing portion fixing the electric box to the casing in front of the back plate.

A transport refrigeration unit according to the present disclosure includes a casing; and an electric box that is provided inside the casing and that accommodates electrical components, in which the casing includes a back plate that is fixed to a front surface of a trailer, a lower plate that extends forward from the back plate, a front plate that is located on a front side of the electric box, a suction port that is provided in the front plate and through which air is introduced into the casing, and an upper plate that faces the lower plate from above, the transport refrigeration unit further includes a fan that is provided on the upper plate and that discharges the air in the casing to an outside, and an upper surface of the electric box is formed to be separated from the upper plate toward the front side.

### Advantageous Effects of Invention

According to the transport refrigeration unit of the present disclosure, the strength of the casing can be improved.

According to the transport refrigeration unit of the present disclosure, the cooling performance of the outdoor heat exchanger can be improved.

### Brief Description of Drawings

Fig. 1 is a perspective view showing a schematic configuration of a refrigerated vehicle including a transport refrigeration unit according to an embodiment of the present disclosure.
Fig. 2 is a perspective view of a refrigeration unit body according to the embodiment of the present disclosure.
Fig. 3 is a view of the interior of an indoor unit and the refrigeration unit body according to the embodiment of the present disclosure as seen from above.
Fig. 4 is a view showing the interior of the refrigeration unit body according to the embodiment of the present disclosure as seen from the front.
Fig. 5 is a view showing the interior of the refrigeration unit body according to the embodiment of the present disclosure as seen from the left.
Fig. 6 is a view showing first fixing portions and second fixing portions according to the embodiment of the present disclosure as seen from the left.

### Description of Embodiments

### (Refrigerated Vehicle)

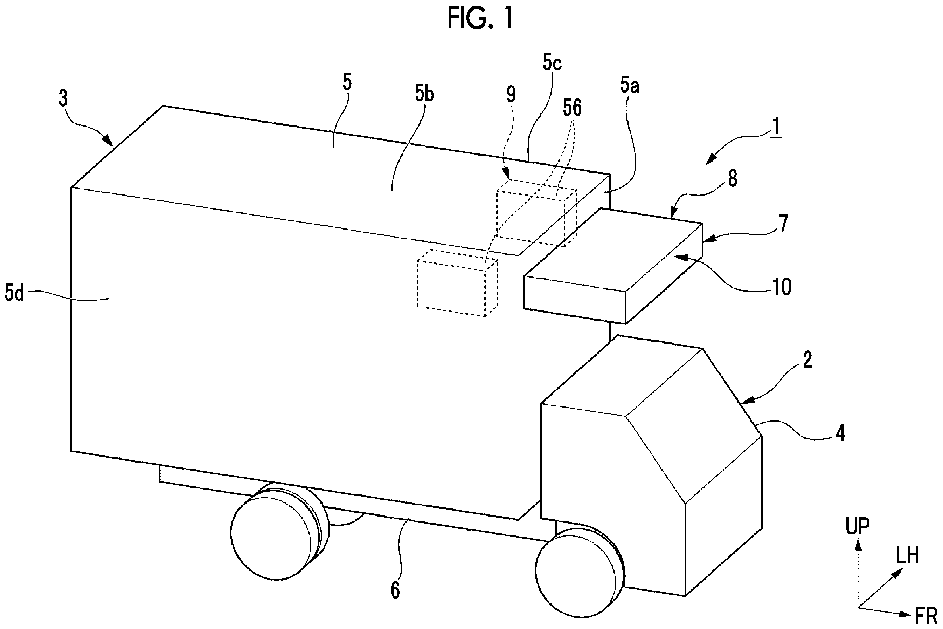

Hereinafter, a refrigerated vehicle 1 according to an embodiment of the present disclosure will be described with reference to Figs. 1 to 6.

As shown in Fig. 1, the refrigerated vehicle 1 includes a tractor 2, a trailer 3, and a transport refrigeration unit 7.

Hereinafter, a vertical up-down direction will be simply referred to as an "up-down direction", one of directions perpendicular to the up-down direction will be referred to as a "front-rear direction", and a direction perpendicular to the up-down direction and the front-rear direction will be referred to as a "left-right direction". A running direction of the refrigerated vehicle 1 coincides with the front-rear direction. The front, the rear, the left, and the right are defined with reference to a driver's seat of the refrigerated vehicle 1.

The tractor 2 includes a cab 4 serving as the driver's seat and runs by means of a running engine (not shown). The tractor 2 tows the trailer 3.

The trailer 3 includes a trailer body 5 and a chassis 6.

The trailer body 5 is a box-shaped container supported from below by the chassis 6. The trailer body 5 extends in the front-rear direction. A space for accommodating a cargo (not shown) is formed inside the trailer body 5.

The trailer body 5 has a front wall 5a disposed on the tractor 2 side, a ceiling wall 5b connected to an upper end of the front wall 5a, a left wall 5c connected to a left end of the front wall 5a and a left end of the ceiling wall 5b, and a right wall 5d connected to a right end of the front wall 5a and a right end of the ceiling wall 5b.

### (Transport Refrigeration Unit)

The transport refrigeration unit 7 has a refrigeration unit body 8 and an indoor unit 9.

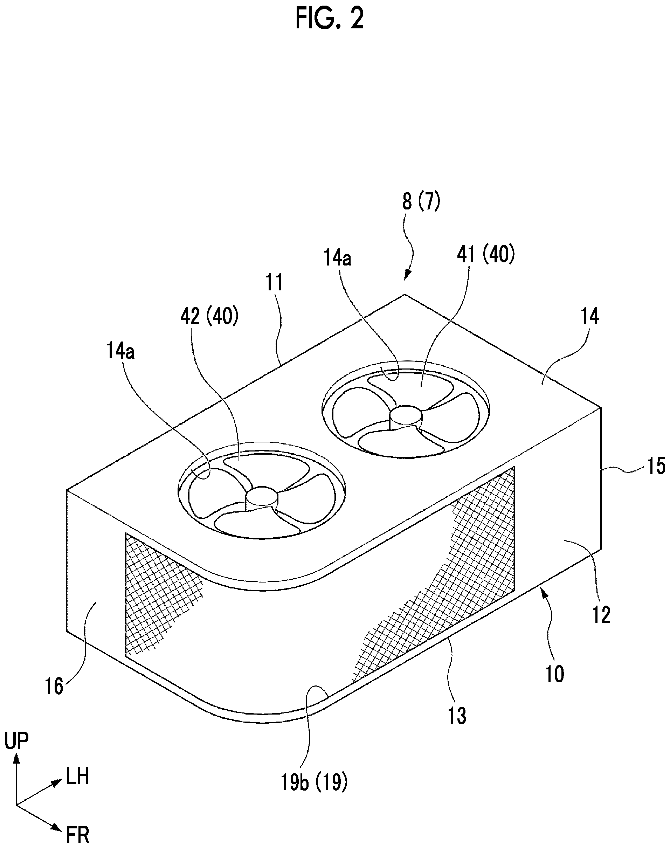

The refrigeration unit body 8 is disposed outside the trailer body 5. The refrigeration unit body 8 is fixed to an upper portion of a front surface of the front wall 5a of the trailer body 5. As shown in Figs. 2 to 4, the refrigeration unit body 8 includes a casing 10, an accumulator 53, a compressor 51, a fan 40, an outdoor heat exchanger 52, a receiver 54, an electric box 20, first fixing portions 61, second fixing portions 62, and a heat sink 30. A space for accommodating devices configuring the refrigeration unit body 8 is formed inside the casing 10.

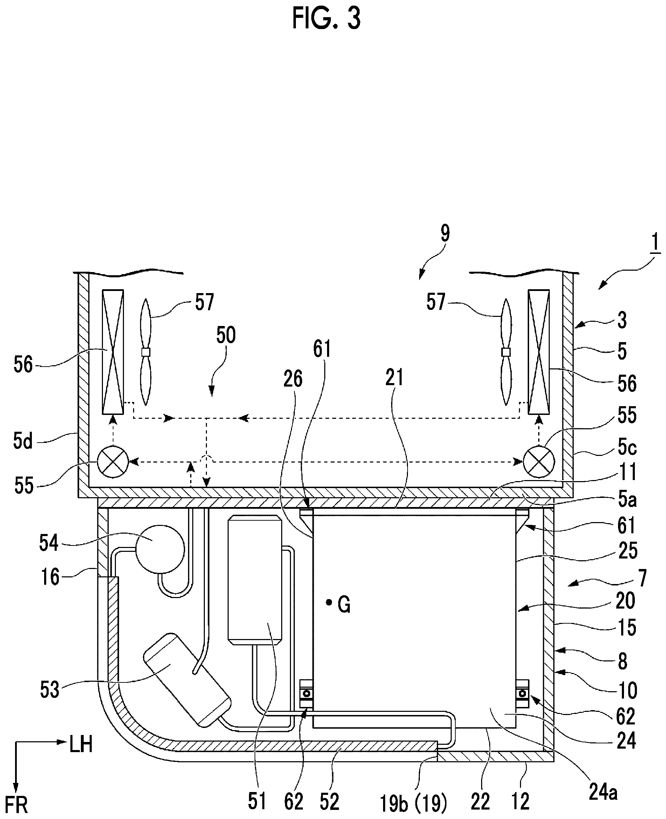

As shown in Fig. 3, the indoor unit 9 includes an expansion valve 55, an indoor heat exchanger 56, and an indoor fan 57.

A cooling cycle 50 of the transport refrigeration unit 7 is configured by the accumulator 53, the compressor 51, the outdoor heat exchanger 52, the receiver 54, the expansion valve 55, the indoor heat exchanger 56, the indoor fan 57, and the like.

The accumulator 53 is accommodated in the casing 10. The accumulator 53 is connected to the indoor heat exchanger 56 in a state in which the accumulator 53 is capable of receiving a refrigerant passing through the indoor heat exchanger 56.

The compressor 51 is accommodated in the casing 10 and is connected to the accumulator 53. The compressor 51 compresses a gas-phase refrigerant supplied from the accumulator 53.

The fan 40 is accommodated in the casing 10. The fan 40 takes air into the casing 10 and discharges the air in the casing 10 to the outside.

The outdoor heat exchanger 52 is accommodated in the casing 10. The outdoor heat exchanger 52 is connected to the compressor 51 in a state in which the outdoor heat exchanger 52 is capable of receiving the refrigerant compressed by the compressor 51. The outdoor heat exchanger 52 is a condenser that cools and condenses the gas-phase refrigerant supplied from the compressor 51 by using the outside air taken into the casing 10 by the fan 40. The gas-phase refrigerant supplied from the compressor 51 is changed to a liquid-phase refrigerant by the outdoor heat exchanger 52. The outdoor heat exchanger 52 is connected to the receiver 54 in a state in which the cooled refrigerant can be supplied to the receiver 54.

The receiver 54 is accommodated in the casing 10. The receiver 54 temporarily stores the liquid-phase refrigerant supplied from the outdoor heat exchanger 52, and absorbs a fluctuation in flow rate of the refrigerant in the cooling cycle 50. The receiver 54 is connected to the expansion valve 55 in a state in which the stored liquid-phase refrigerant can be supplied.

The expansion valve 55 is accommodated in the trailer body 5. The expansion valve 55 is provided one by one on the left side and the right side in the trailer body 5. The two expansion valves 55 are disposed at positions symmetrical when viewed from above, and have the same configuration. Hereinafter, the left expansion valve 55 of the two expansion valves 55 will be described, and the right expansion valve 55 will not be described.

The expansion valve 55 is disposed in an upper portion (a portion close to the ceiling wall 5b) of a corner formed by the left wall 5c and the front wall 5a. The expansion valve 55 expands (decompresses) the liquid-phase refrigerant supplied from the receiver 54. The expansion valve 55 is connected to the indoor heat exchanger 56 in a state in which the expanded liquid-phase refrigerant can be supplied to the indoor heat exchanger 56.

The indoor heat exchanger 56 is accommodated in the trailer body 5. The indoor heat exchanger 56 is provided one by one on the left side and the right side in the trailer body 5. The two indoor heat exchangers 56 are disposed at positions symmetrical when viewed from above, and have the same configuration. Hereinafter, the indoor heat exchanger 56 on the left side of the two indoor heat exchangers 56 will be described, and the indoor heat exchanger 56 on the right side will not be described.

The indoor heat exchanger 56 is disposed near the expansion valve 55. The indoor heat exchanger 56 is an evaporator that exchanges heat between the air around the indoor heat exchanger 56 and the liquid-phase refrigerant supplied from the expansion valve 55 to evaporate the liquid-phase refrigerant. The gas-phase refrigerant supplied from the expansion valve 55 is changed to the liquid-phase refrigerant by the indoor heat exchanger 56. At this time, heat of the air around the indoor heat exchanger 56 is absorbed to the refrigerant. In this way, the air around the indoor heat exchanger 56 is cooled.

The indoor fan 57 is accommodated in the trailer body 5. The indoor fan 57 is provided one by one on the left side and the right side in the trailer body 5. The two indoor fans 57 are disposed at positions symmetrical when viewed from above, and have the same configuration. Hereinafter, the indoor fan 57 on the left side of the two indoor fans 57 will be described, and the indoor fan 57 on the right side will not be described.

The indoor fan 57 is disposed near the indoor heat exchanger 56. The indoor fan 57 circulates the air cooled by the indoor heat exchanger 56 inside the trailer body 5 to cool the inside of the trailer body 5.

### (Details of Refrigeration Unit Body)

Hereinafter, details of the refrigeration unit body 8 will be described with reference to Figs. 2 to 6.

### (Casing)

As shown in Figs. 2 to 5, the casing 10 is formed in a cubic shape. The casing 10 includes a back plate 11 fixed to the front surface of the front wall 5a of the trailer body 5, a front plate 12 disposed to face the back plate 11 in the front-rear direction, a lower plate 13 connected to lower ends of the back plate 11 and the front plate 12, an upper plate 14 connected to upper ends of the back plate 11 and the front plate 12, and a left plate 15 and a right plate 16 that are disposed to face each other in the left-right direction and are connected to the back plate 11, the front plate 12, the lower plate 13, and the upper plate 14. In addition, the casing 10 is provided with a suction port 19 through which outside air is introduced into the casing 10. The suction port 19 includes a cooling suction port 19a and a main suction port 19b.

The casing 10 is formed to be thin in the up-down direction. The casing 10 is formed such that a height in the up-down direction is, for example, a ratio of 50% or less with respect to a width in the left-right direction and a depth in the front-rear direction.

The lower plate 13 extends forward from the lower end of the back plate 11. A plate thickness direction of the lower plate 13 coincides with the up-down direction. The lower plate 13 is provided with a cooling suction port 19a that penetrates the lower plate 13 and introduces air into the inside of the casing 10.

The lower plate 13 is formed integrally with the back plate 11 and is formed in an L-shape together with the back plate 11 when viewed from the left-right direction. The lower plate 13 functions as a main frame that supports an accommodated object in the casing 10 together with the back plate 11.

The upper plate 14 faces the lower plate 13 from above. A plate thickness direction of the upper plate 14 coincides with the up-down direction. The upper plate 14 is provided with two discharge ports 14a penetrating the upper plate 14 and discharging the air from the inside to the outside of the casing 10. The two discharge ports 14a are provided on the left side and the right side of the upper plate 14. The left discharge port 14a is provided to face the cooling suction port 19a in the up-down direction. The discharge port 14a penetrates the upper plate 14 in the up-down direction. The discharge port 14a is formed in a circular shape when viewed from the up-down direction.

The front plate 12 is provided on the front side of the electric box 20. The front plate 12 and the right plate 16 are provided with the main suction port 19b through which the air is introduced into the casing 10. The main suction port 19b is formed in an L-shape when viewed from the up-down direction, and extends continuously from the front plate 12 to the right plate 16. The main suction port 19b penetrates the front plate 12 and the right plate 16. In addition, a wire mesh is mounted to the main suction port 19b (refer to Fig. 2).

The casing 10 described above accommodates the accumulator 53, the compressor 51, the receiver 54, the electric box 20, the heat sink 30, the outdoor heat exchanger 52, and the fan 40. More specifically, the accumulator 53, the compressor 51, and the receiver 54 are provided in a space on the right side in the casing 10. The electric box 20 and the heat sink 30 are provided in a space on the left side in the casing 10. In addition, the outdoor heat exchanger 52 is provided at a position facing the main suction port 19b in the casing 10, and the fan 40 is provided at a position facing the discharge port 14a in the casing 10.

### (Electric box)

The electric box 20 is disposed between the cooling suction port 19a and the left discharge port 14a. A space capable of accommodating various devices is formed inside the electric box 20. The electrical components (not shown) such as a power supply such as an inverter or a converter, and a power drive system component are accommodated in the electric box 20.

The electric box 20 is disposed to be shifted to one side (left side in the present embodiment) in the left-right direction in the casing 10. The electric box 20 is formed such that a dimension H in the up-down direction decreases toward the front. The electric box 20 includes a back panel 21 that is disposed to face the back plate 11 of the casing 10, a front panel 22 that is disposed to face the back panel 21 in the front-rear direction, a lower panel 23 that is connected to lower ends of the back panel 21 and the front panel 22, an upper panel 24 that is connected to upper ends of the back panel 21 and the front panel 22, and a left panel 25 and a right panel 26 that are disposed to face each other in the left-right direction and are connected to the back panel 21, the front panel 22, the lower panel 23, and the upper panel 24.

The back panel 21 is disposed at a position separated forward from the back plate 11 of the casing 10.

The front panel 22 is disposed at a position separated rearward from the front plate 12 of the casing 10.

The lower panel 23 is disposed in a state of being floated upward from the lower plate 13 of the casing 10. The lower panel 23 is disposed to cover the cooling suction port 19a of the casing 10. The lower panel 23 is formed in a rectangular plate shape in which the front-rear direction is a longitudinal direction.

A rear end of the lower panel 23 is connected to the lower end of the back panel 21. The lower panel 23 is formed in an L-shape together with the back panel 21 when viewed from the left-right direction.

Heat of the electrical components accommodated in the electric box 20 is transmitted to the lower panel 23. For this reason, a lower surface of the lower panel 23 is provided at a position facing the cooling suction port 19a, and is a cooling target surface 27 that is cooled by blowing the air introduced into the casing 10 through the cooling suction port 19a.

The cooling target surface 27 extends in a horizontal direction, and a separation distance from the lower plate 13 of the casing 10 is kept constant.

The upper panel 24 is disposed at a position separated downward from the upper plate 14 of the casing 10. The upper panel 24 is formed in a rectangular plate shape and is disposed to be inclined downward toward the front. That is, an upper surface 24a of the upper panel 24 is formed to be separated downward from the upper plate 14 of the casing 10 toward the front side.

A plate thickness direction of the left panel 25 coincides with the left-right direction. The left panel 25 extends in the front-rear direction. The left panel 25 is formed in a trapezoidal shape in which a dimension H in the up-down direction is tapered toward the front when viewed from the left-right direction. When viewed from the left-right direction, a rear end of the left panel 25 and a lower end of the left panel 25 are orthogonal to each other in an L-shape.

The rear end of the left panel 25 is connected to a left end of the back panel 21, and the lower end of the left panel 25 is connected to a left end of the lower panel 23.

The right panel 26 is formed in the same shape as the left panel 25.

A rear end of the right panel 26 is connected to a right end of the back panel 21, and a lower end of the right panel 26 is connected to a right end of the lower panel 23.

### (First Fixing Portion and Second Fixing Portion)

The first fixing portions 61 and the second fixing portions 62 are provided to fix the electric box 20 to the casing 10. The first fixing portions 61 are provided in a rear portion of the electric box 20, and the second fixing portions 62 are provided in a front portion of the electric box 20. The first fixing portions 61 and the second fixing portions 62 are provided to be left-right symmetrical with the electric box 20 interposed therebetween. The first fixing portions 61 and the second fixing portions 62 on the left side and the right side have the same configuration. Hereinafter, the first fixing portion 61 and the second fixing portion 62 on the left side among the first fixing portions 61 and the second fixing portions 62 on the left side and the right side will be described, and the first fixing portion 61 and the second fixing portion 62 on the right side will not be described.

The first fixing portion 61 is provided at a rear end portion of the left panel 25 of the electric box 20. A pair of the first fixing portions 61 are provided to be separated from each other in the up-down direction. The first fixing portion 61 fixes the electric box 20 to the back plate 11 of the casing 10. The first fixing portion 61 fixes the electric box 20 to the casing 10 such that a space is formed between the back panel 21 of the electric box 20 and the back plate 11 of the casing 10.

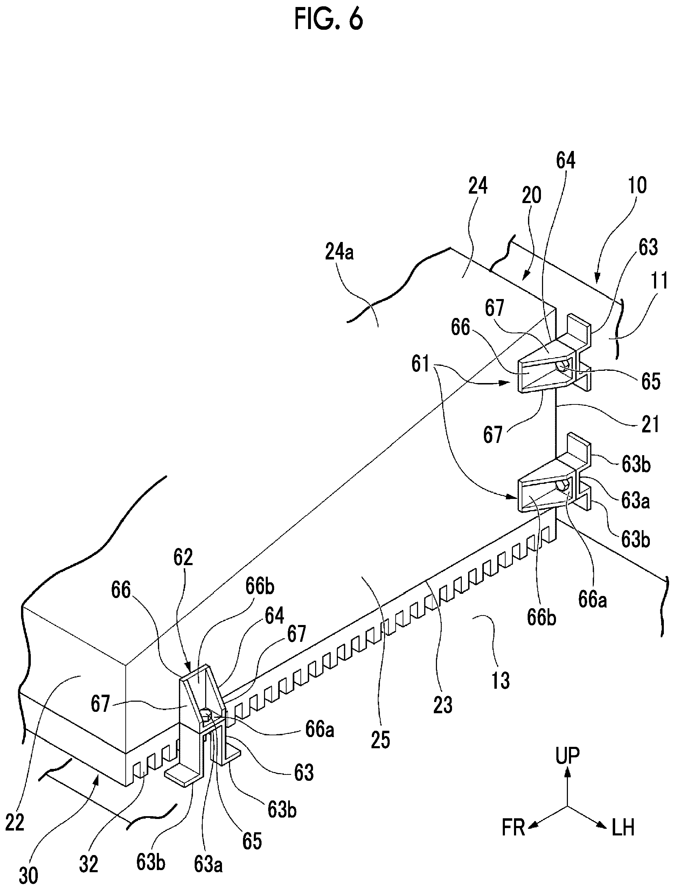

As shown in Fig. 6, the first fixing portion 61 includes a casing-side member 63 joined to the casing 10, an electric box-side member 64 joined to the electric box 20, and a bolt 65.

The casing-side member 63 has a fastening part 63a and a joining part 63b. The fastening part 63a is formed in a U-shape that is open toward the back plate 11 of the casing 10 when viewed from the left-right direction. The joining part 63b is provided at an opening end of the fastening part 63a when viewed from the left-right direction, and extends in a direction away from the fastening part 63a. The joining part 63b is joined to the back plate 11 by, for example, welding or the like.

The electric box-side member 64 includes a fixing portion body 66 and ribs 67. The fixing portion body 66 is formed in an L-shape when viewed from the up-down direction. The fixing portion body 66 has a first piece 66a that extends along the back plate 11 of the casing 10 and a second piece 66b that extends along the left panel 25 of the electric box 20. The first piece 66a is overlapped with the fastening part 63a of the casing-side member 63. The second piece 66b is joined to the left panel 25 of the electric box 20. The ribs 67 are respectively provided at both ends of the fixing portion body 66 in the up-down direction. The rib 67 is formed in a right-angled triangular shape having a right angle corner at a boundary between the first piece 66a and the second piece 66b when viewed from the up-down direction. The rib 67 connects the first piece 66a and the second piece 66b to each other, and prevents the first piece 66a and the second piece 66b from being bent inward.

The bolt 65 fastens and fixes the fastening part 63a of the casing-side member 63 and the first piece 66a of the electric box-side member 64 in a state of being overlapped with each other.

The second fixing portion 62 is provided in a front portion of the left panel 25 of the electric box 20. The second fixing portion 62 fixes the electric box 20 to the lower plate 13 of the casing 10 in front of the back plate 11 of the casing 10. The second fixing portion 62 fixes the electric box 20 to the casing 10 such that a space is formed between the lower panel 23 of the electric box 20 and the lower plate 13 of the casing 10.

The second fixing portion 62 includes the same configuration as that of the first fixing portion 61. That is, the second fixing portion 62 includes the casing-side member 63, the electric box-side member 64, and the bolt 65. Hereinafter, regarding configurations of the second fixing portions 62, the same configurations as those of the first fixing portion 61 will be denoted by the same reference signs, and descriptions thereof will not be repeated appropriately.

The fastening part 63a of the second fixing portion 62 is formed in a U-shape that is open toward the lower plate 13 of the casing 10 when viewed from the left-right direction. The joining part 63b of the second fixing portion 62 is joined to the lower plate 13 by, for example, welding or the like.

The fixing portion body 66 of the second fixing portion 62 is formed in an L-shape when viewed from the front-rear direction. The fixing portion body 66 of the second fixing portion 62 has the first piece 66a that extends along the lower plate 13 of the casing 10 and the second piece 66b that extends along the left panel 25 of the electric box 20. The ribs 67 of the second fixing portion 62 are provided at both ends of the fixing portion body 66 in the front-rear direction. The rib 67 of the second fixing portion 62 is formed in a right-angled triangular shape having a right angle corner at a boundary between the first piece 66a and the second piece 66b when viewed from the front-rear direction.

Hereinafter, an upper end 61a and a lower end 61b of the first fixing portion 61 will be considered by integrating all the first fixing portions 61 described above. That is, in the present embodiment, the upper end of the first fixing portion 61 on the upper side out of a pair of the first fixing portions 61 is the upper end 61a of the first fixing portion 61, and the lower end of the first fixing portion 61 on the lower side out of the pair of first fixing portions 61 is the lower end 61b of the first fixing portion 61. In addition, regarding the second fixing portion 62 described above, a front end and a rear end of the second fixing portion 62 will be considered by integrating all the second fixing portions 62. In the present embodiment, since only one second fixing portion 62 is provided, a front end 62a and a rear end of the second fixing portion 62 are determined for one second fixing portion 62.

In the present embodiment, a virtual triangle T is formed by the upper end 61a and the lower end 61b of the first fixing portion 61 and the front end 62a of the second fixing portion 62 when viewed from the left-right direction.

### (Heat Sink)

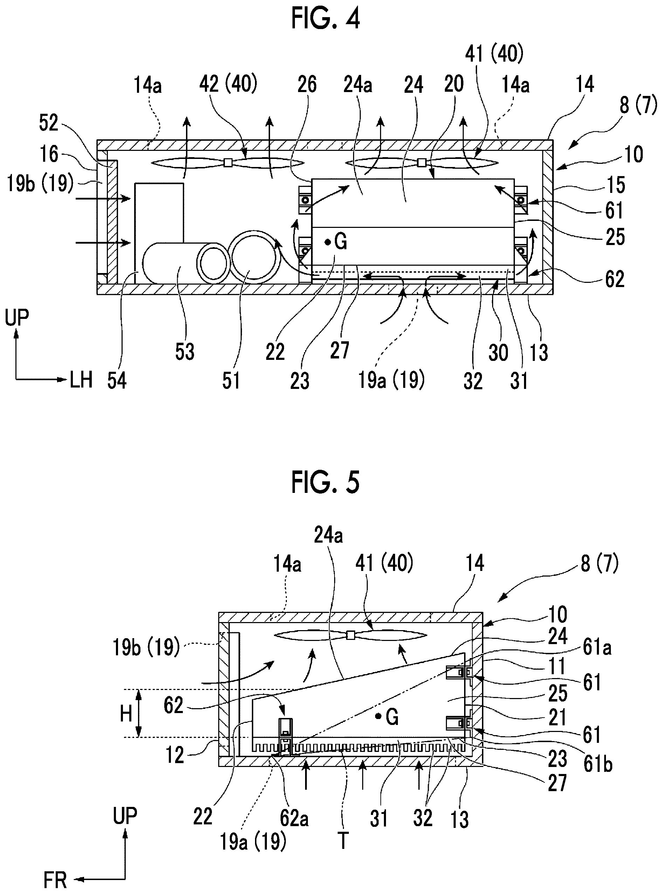

As shown in Figs. 4 and 5, the heat sink 30 is provided to be interposed between the cooling target surface 27 of the electric box 20 and the cooling suction port 19a of the casing 10. The heat sink 30 includes a cooling plate 31 and a plurality of fins 32.

The cooling plate 31 is provided along the cooling target surface 27 of the electric box 20. The cooling plate 31 is fixed to the electric box 20 in a state in which an upper surface thereof is in close contact with the cooling target surface 27.

The plurality of fins 32 protrude from the cooling plate 31 and are arranged to extend along the cooling plate 31. An extending direction of the fin 32 coincides with the left-right direction.

### (Compressor)

The compressor 51 is disposed to be shifted to the other side (right side in the present embodiment) in the left-right direction in the casing 10.

### (Outdoor Heat Exchanger)

The outdoor heat exchanger 52 is provided between the electric box 20 and the main suction port 19b. The outdoor heat exchanger 52 is formed in the same shape as the main suction port 19b when viewed from the up-down direction. The outdoor heat exchanger 52 is formed in, for example, an L-shape when viewed from the up-down direction. The outdoor heat exchanger 52 exchanges heat between the air introduced from the main suction port 19b and the refrigerant flowing through the cooling cycle 50.

The outdoor heat exchanger 52 is disposed to face the main suction port 19b across the main suction port 19b. The compressor 51 faces the main suction port 19b via the outdoor heat exchanger 52. Further, the right side of the electric box 20 faces the main suction port 19b via the outdoor heat exchanger 52.

### (Fan)

The fan 40 is provided on a side opposite to the cooling target surface 27 of the electric box 20. The fan 40 discharges the air in the casing 10 to the outside. The fan 40 is provided on the upper plate 14 of the casing 10. More specifically, the fan 40 includes a first fan 41 disposed to face the left discharge port 14a of the two discharge ports 14a of the casing 10, and a second fan 42 disposed to face the right discharge port 14a. An axial direction of the fan 40 coincides with the up-down direction.

The first fan 41 is provided on a side opposite to the cooling suction port 19a with the electric box 20 interposed therebetween.

The second fan 42 faces the accumulator 53, the compressor 51, and the receiver 54.

### (Position of Center of Gravity of Entirety of Casing and Accommodated Object in Casing)

Hereinafter, a position of a center of gravity G of an entirety of the casing 10 and the accommodated object in the casing 10 will be described with reference to Figs. 3 to 5.

As shown in Figs. 3 and 4, the center of gravity G of the entirety of the casing 10 and the accommodated object in the casing 10 is located behind a fixing position of the second fixing portion 62. That is, the second fixing portion 62 fixes the electric box 20 to the casing 10 in front of the center of gravity G of the entirety of the casing 10 and the accommodated object in the casing 10.

In addition, when viewed from the up-down direction, the center of gravity G of the entirety of the casing 10 and the accommodated object in the casing 10 is located inside the electric box 20.

In addition, as shown in Fig. 5, when viewed from the left-right direction, the center of gravity G of the entirety of the casing 10 and the accommodated object in the casing 10 is located inside the virtual triangle T described above.

### (Operations and Effects)

In the transport refrigeration unit 7 described above, the air in the casing 10 flows as follows.

As shown in Figs. 4 and 5, when the fan 40 is operated, the air in the casing 10 is discharged to the outside, and the air is introduced into the casing 10 through the suction port 19.

The air introduced into the casing 10 from the cooling suction port 19a of the suction port 19 is blown to the cooling plate 31 of the heat sink 30. The air blown to the cooling plate 31 flows along the fin 32 and is guided to both end portions of the cooling plate 31 in the left-right direction. The air guided to both end portions of the cooling plate 31 in the left-right direction flows to bypass the electric box 20. More specifically, the air flows along the left wall 5c or the right wall 5d of the electric box 20, then flows along the inclination of the upper surface 24a of the electric box 20, and is sucked into the fan 40 disposed on an upper portion of the casing 10. The air introduced into the casing 10 from the cooling suction port 19a and bypassing the electric box 20 is mainly sucked into the first fan 41 of the fan 40. The air sucked into the fan 40 is discharged to the outside of the casing 10 through the discharge port 14a.

In addition, the air introduced into the casing 10 from the main suction port 19b of the suction port 19 passes through the outdoor heat exchanger 52. The air that has passed through the outdoor heat exchanger 52 flows along the surface of the compressor 51 or the electric box 20. The compressor 51 and the electric box 20 are cooled by the air flowing along the surface. The air guided to the electric box 20 side flows along the inclination of the upper surface 24a of the electric box 20 and is sucked into the fan 40 disposed in the upper portion of the casing 10. The air sucked into the fan 40 is discharged to the outside of the casing 10 through the discharge port 14a.

In the present embodiment, the transport refrigeration unit 7 includes the first fixing portion 61 that fixes the electric box 20 to the back plate 11, and the second fixing portion 62 that fixes the electric box 20 to the casing 10 in front of the back plate 11.

Accordingly, a load of the entirety of the casing 10 and the accommodated object in the casing 10 can be distributed to the back plate 11 of the casing 10 and a portion in front of the back plate 11 in the casing 10 via the electric box 20. Therefore, the electric box 20 functions as a strength member of the casing 10. Thus, a strength of the casing 10 can be improved.

In the present embodiment, the second fixing portion 62 fixes the electric box 20 to the casing 10 in front of the center of gravity G of the entirety of the casing 10 and the accommodated object in the casing 10.

Accordingly, the load of the entirety of the casing 10 and the accommodated object in the casing 10 can be distributed to the front and rear of the electric box 20. Therefore, the strength of the casing 10 can be further improved.

In the present embodiment, the virtual triangle T is formed by the upper end 61a and the lower end 61b of the first fixing portion 61 and the front end 62a of the second fixing portion 62 when viewed from the left-right direction.

Accordingly, the load of the entirety of the casing 10 and the accommodated object in the casing 10 can be distributed to three loads applied to the electric box 20 and can be transmitted to the casing 10 via the electric box 20. Therefore, the strength of the casing 10 can be further improved.

In the present embodiment, when viewed from the left-right direction, the center of gravity G of the entirety of the casing 10 and the accommodated object in the casing 10 is located inside the virtual triangle T.

In this manner, it is possible to suppress occurrence of unevenness in the load distributed by the electric box 20. Therefore, the strength of the casing 10 can be further improved.

In the present embodiment, when viewed from the up-down direction, the center of gravity G of the entirety of the casing 10 and the accommodated object in the casing 10 is located inside the electric box 20.

Accordingly, the load of the entirety of the casing 10 and the accommodated object in the casing 10 can be more reliably distributed by the electric box 20 that functions as a strength member. Therefore, the strength of the casing 10 can be further improved.

In the present embodiment, the electric box 20 may be formed such that the dimension H in the up-down direction decreases toward the front.

Accordingly, the center of gravity of the electric box 20 can be brought close to the back plate 11 of the casing 10, as compared with a case where the dimension H of the electric box 20 in the up-down direction is constant in the front-rear direction. Therefore, the center of gravity G of the entirety of the casing 10 and the accommodated object in the casing 10 can be brought close to the back plate 11 of the casing 10.

In the present embodiment, the second fixing portion 62 fixes the electric box 20 to the casing 10 such that a space is formed between the electric box 20 and the casing 10.

In this manner, an air flow path is formed around the electric box 20. Therefore, since a flow rate of the air around the electric box 20 can be increased, the cooling performance of the electric box 20 can be improved.

In the present embodiment, the electric box 20 is disposed to be shifted to one side in the left-right direction, and the compressor 51 is disposed to be shifted to the other side in the left-right direction. The electric box 20 and the compressor 51 face the suction port 19 via the outdoor heat exchanger 52.

In this manner, the air that is introduced into the casing 10 and that has been subjected to heat exchange with the refrigerant by the outdoor heat exchanger 52 can be used to cool the electric box 20 and the compressor 51. Therefore, the cooling performance of the electric box 20 and the compressor 51 can be improved.

In the present embodiment, the transport refrigeration unit 7 further includes the fan 40 that is provided on the upper plate 14 of the casing 10 and discharges the air in the casing 10 to the outside. The upper surface 24a of the electric box 20 is formed to be separated from the upper plate 14 of the casing 10 toward the front side.

In this manner, the air introduced into the casing 10 from the suction port 19 can be guided to the fan 40 by the inclination of the upper surface 24a of the electric box 20. Therefore, a pressure loss of the air flowing inside the casing 10 can be reduced, and a flow rate of the air inside the casing 10 can be increased. Therefore, the cooling performance of the outdoor heat exchanger 52 can be improved.

### (Other Embodiments)

The embodiment of the present disclosure has been described in detail with reference to the drawings hereinbefore. However, the specific configuration is not limited to the embodiment, and includes design changes and the like within a scope not departing from the gist of the present disclosure.

In the above embodiment, a case where the casing 10 is a hexahedron has been described. However, the present disclosure is not limited thereto. For example, the casing 10 may be formed in a tetrahedral shape having the back plate 11 and the lower plate 13.

In the above embodiment, a case where the electric box 20 is a hexahedron has been described. However, the present disclosure is not limited thereto. For example, the electric box 20 may be formed in a tetrahedral shape having the back panel 21 and the lower panel 23.

In the above embodiment, the first fixing portion 61 and the second fixing portion 62 are provided to be left-right symmetrical with the electric box 20 interposed therebetween. However, the present disclosure is not limited thereto. The first fixing portion 61 may fix the electric box 20 to the back plate 11 of the casing 10, and the second fixing portion 62 may fix the electric box 20 to a portion in front of the back plate 11 in the casing 10. For example, the second fixing portion 62 may fix the left panel 25 or the right panel 26 of the electric box 20 to the upper plate 14 of the casing 10. The positions and the number of the first fixing portion 61 and the second fixing portion 62 can be appropriately changed.

In the above embodiment, the compressor 51 faces the main suction port 19b via the outdoor heat exchanger 52, and the right side of the electric box 20 faces the main suction port 19b via the outdoor heat exchanger 52. However, the present disclosure is not limited thereto. Only one of the compressor 51 and the outdoor heat exchanger 52 may be provided to face the main suction port 19b via the outdoor heat exchanger 52.

In the above embodiment, the electric box 20 is formed such that the upper surface 24a is separated downward from the upper plate 14 of the casing 10 as the upper surface 24a extends forward. However, the present disclosure is not limited thereto. The electric box 20 may be formed in a cubic shape in which a separation distance between the upper surface 24a and the upper plate 14 of the casing 10 is constant.

In the above embodiment, it is assumed that the cooling target surface 27, which is the lower surface of the electric box 20, extends in a horizontal direction. However, the present disclosure is not limited thereto. The cooling target surface 27 may be inclined to be separated downward from the upper plate 14 of the casing 10, similar to the upper surface 24a of the electric box 20.

In the above embodiment, a pair of the first fixing portions 61 are provided to be separated from each other in the up-down direction. However, the present disclosure is not limited thereto. For example, only one first fixing portion 61 may be provided in the upper portion of the electric box 20. In this case, the upper end 61a and the lower end 61b of the first fixing portion 61 are defined with respect to one first fixing portion 61. In addition, in this case, the first fixing portion 61 may be formed in a shape extending in the up-down direction.

### <Additional Notes>

The transport refrigeration unit 7 described in each embodiment is understood, for example, as follows.

(1) A transport refrigeration unit 7 according to a first aspect includes a casing 10 having a back plate 11 fixed to a front surface of a trailer 3; an electric box 20 provided inside the casing 10 and accommodating electrical components; a first fixing portion 61 fixing the electric box 20 to the back plate 11; and a second fixing portion 62 fixing the electric box 20 to the casing 10 in front of the back plate 11.
   Accordingly, a load of the entirety of the casing 10 and the accommodated object in the casing 10 can be distributed to the back plate 11 of the casing 10 and a portion in front of the back plate 11 in the casing 10 via the electric box 20. Therefore, the electric box 20 functions as a strength member of the casing 10.
(2) The transport refrigeration unit 7 according to a second aspect is the transport refrigeration unit 7 of (1), in which the second fixing portion 62 may fix the electric box 20 to the casing 10 in front of a center of gravity G of an entirety of the casing 10 and an accommodated object in the casing 10.
   Accordingly, the load of the entirety of the casing 10 and the accommodated object in the casing 10 can be distributed to the front and rear of the electric box 20.
(3) The transport refrigeration unit 7 according to a third aspect is the transport refrigeration unit 7 of (1) or (2), in which a virtual triangle T may be formed by an upper end 61a and a lower end 61b of the first fixing portion 61 and a front end 62a of the second fixing portion 62 when viewed from a left-right direction.
   Accordingly, the load of the entirety of the casing 10 and the accommodated object in the casing 10 can be distributed to three loads applied to the electric box 20 and can be transmitted to the casing 10 via the electric box 20.
(4) The transport refrigeration unit 7 according to a fourth aspect is the transport refrigeration unit 7 of (3), in which when viewed from the left-right direction, a center of gravity G of an entirety of the casing 10 and an accommodated object in the casing 10 may be located inside the virtual triangle T.
   In this manner, it is possible to suppress occurrence of unevenness in the load distributed by the electric box 20.
(5) The transport refrigeration unit 7 according to a fifth aspect is the transport refrigeration unit 7 according to any one of (1) to (4), in which when viewed from an up-down direction, a center of gravity G of an entirety of the casing 10 and an accommodated object in the casing 10 may be located inside the electric box 20.
   Accordingly, the load of the entirety of the casing 10 and the accommodated object in the casing 10 can be more reliably distributed by the electric box 20 that functions as a strength member.
(6) The transport refrigeration unit 7 according to a sixth aspect is the transport refrigeration unit 7 according to any one of (1) to (5), in which the electric box 20 may be formed such that a dimension H in an up-down direction decreases toward a front side.
   Accordingly, the center of gravity of the electric box 20 can be brought close to the back plate 11 of the casing 10, as compared with a case where the dimension H of the electric box 20 in the up-down direction is constant in the front-rear direction. Therefore, the center of gravity G of the entirety of the casing 10 and the accommodated object in the casing 10 can be brought close to the back plate 11 of the casing 10.
(7) The transport refrigeration unit 7 according to a seventh aspect is the transport refrigeration unit 7 according to any one of (1) to (6), in which the second fixing portion 62 may fix the electric box 20 to the casing 10 such that a space is formed between the electric box 20 and the casing 10.
   In this manner, an air flow path is formed around the electric box 20. Therefore, the flow rate of the air around the electric box 20 can be increased.
(8) The transport refrigeration unit 7 according to an eighth aspect is the transport refrigeration unit 7 according to any one of (1) to (7), in which the casing 10 may be provided with a suction port 19, the transport refrigeration unit may further include a compressor 51 provided inside the casing 10, and an outdoor heat exchanger 52 disposed to face the suction port 19 across the suction port 19, the electric box 20 may be disposed to be shifted to one side in a left-right direction, the compressor 51 may be disposed to be shifted to the other side in the left-right direction, and at least one of the electric box 20 and the compressor 51 may face the suction port 19 via the outdoor heat exchanger 52.
   In this manner, the air that is introduced into the casing 10 and that has been subjected to heat exchange with the refrigerant by the outdoor heat exchanger 52 can be used to cool at least one of the electric box 20 and the compressor 51.
(9) The transport refrigeration unit 7 according to a ninth aspect is the transport refrigeration unit 7 of any one of (1) to (7), in which the casing 10 may include a lower plate 13 that extends forward from the back plate 11, a front plate 12 that is located on a front side of the electric box 20, a suction port 19 that is provided in the front plate 12 and through which air is introduced into the casing 10, and an upper plate 14 that faces the lower plate 13 from above, the transport refrigeration unit may further include a fan 40 that is provided on the upper plate 14 and that discharges the air in the casing 10 to an outside, and an upper surface 24a of the electric box 20 may be formed to be separated from the upper plate 14 toward the front side.
   In this manner, the air introduced into the casing 10 from the suction port 19 can be guided to the fan 40 by the inclination of the upper surface 24a of the electric box 20. Therefore, a pressure loss of the air flowing inside the casing 10 can be reduced, and a flow rate of the air inside the casing 10 can be increased.
(10) A transport refrigeration unit 7 according to a tenth aspect includes a casing 10; and an electric box 20 that is provided inside the casing 10 and that accommodates electrical components, in which the casing 10 includes a back plate 11 that is fixed to a front surface of a trailer, a lower plate 13 that extends forward from the back plate 11, a front plate 12 that is located on a front side of the electric box 20, a suction port 19 that is provided in the front plate 12 and through which air is introduced into the casing 10, and an upper plate 14 that faces the lower plate 13 from above, the transport refrigeration unit further includes a fan 40 that is provided on the upper plate 14 and that discharges the air in the casing 10 to an outside, and an upper surface 24a of the electric box 20 is formed to be separated from the upper plate 14 toward the front side.
(11) The transport refrigeration unit 7 according to an eleventh aspect is the transport refrigeration unit 7 of (9) or (10), which may further include a compressor 51 provided inside the casing 10; and an outdoor heat exchanger 52 that is disposed to face the suction port 19 across the suction port 19, in which the electric box 20 may be disposed to be shifted to one side in a left-right direction, the compressor 51 may be disposed to be shifted to the other side in the left-right direction, and at least one of the electric box 20 and the compressor 51 may face the suction port 19 via the outdoor heat exchanger 52.

### Industrial Applicability

The present disclosure relates to a transport refrigeration unit. According to the present disclosure, the strength of the casing can be improved. According to the present disclosure, the cooling performance of the outer heat exchanger can be improved.

### Reference Signs List

- 1:: refrigerated vehicle
- 2:: tractor
- 3:: trailer
- 4:: cab
- 5:: trailer body
- 5a:: front wall
- 5b:: ceiling wall
- 5c:: left wall
- 5d:: right wall
- 6:: chassis
- 7:: transport refrigeration unit
- 8:: refrigeration unit body
- 9:: indoor unit
- 10:: casing
- 11:: back plate
- 12:: front plate
- 13:: lower plate
- 14:: upper plate
- 14a:: discharge port
- 15:: left plate
- 16:: right plate
- 19:: suction port
- 19a:: cooling suction port
- 19b:: main suction port
- 20:: electric box
- 21:: back panel
- 22:: front panel
- 23:: lower panel
- 24:: upper panel
- 24a:: upper surface
- 25:: left panel
- 26:: right panel
- 27:: cooling target surface
- 30:: heat sink
- 31:: cooling plate
- 32:: fin
- 40:: fan
- 41:: first fan
- 42:: second fan
- 50:: cooling cycle
- 51:: compressor
- 52:: outdoor heat exchanger
- 53:: accumulator
- 54:: receiver
- 55:: expansion valve
- 56:: indoor heat exchanger
- 57:: indoor fan
- 61:: first fixing portion
- 61a:: upper end
- 61b:: lower end
- 62:: second fixing portion
- 62a:: front end
- 63:: casing-side member
- 63a:: fastening part
- 63b:: joining part
- 64:: electric box-side member
- 65:: bolt
- 66:: fixing portion body
- 66a:: first piece
- 66b:: second piece
- 67:: rib
- G:: center of gravity
- H:: dimension
- T:: virtual triangle

## Claims

1. A transport refrigeration unit comprising:
a casing having a back plate fixed to a front surface of a trailer;
an electric box provided inside the casing and accommodating electrical components;
a first fixing portion fixing the electric box to the back plate; and
a second fixing portion fixing the electric box to the casing in front of the back plate.

2. The transport refrigeration unit according to Claim 1,
wherein the second fixing portion fixes the electric box to the casing in front of a center of gravity of an entirety of the casing and an accommodated object in the casing.

3. The transport refrigeration unit according to Claim 1 or 2,
wherein a virtual triangle is formed by an upper end and a lower end of the first fixing portion and a front end of the second fixing portion when viewed from a left-right direction.

4. The transport refrigeration unit according to Claim 3,
wherein when viewed from the left-right direction, a center of gravity of an entirety of the casing and an accommodated object in the casing is located inside the virtual triangle.

5. The transport refrigeration unit according to any one of Claims 1 to 4,
wherein when viewed from an up-down direction, a center of gravity of an entirety of the casing and an accommodated object in the casing is located inside the electric box.

6. The transport refrigeration unit according to any one of Claims 1 to 5,
wherein the electric box is formed such that a dimension in an up-down direction decreases toward a front side.

7. The transport refrigeration unit according to any one of Claims 1 to 6,
wherein the second fixing portion fixes the electric box to the casing such that a space is formed between the electric box and the casing.

8. The transport refrigeration unit according to any one of Claims 1 to 7,
wherein the casing is provided with a suction port,
the transport refrigeration unit further comprises a compressor provided inside the casing, and an outdoor heat exchanger disposed to face the suction port across the suction port,
the electric box is disposed to be shifted to one side in a left-right direction,
the compressor is disposed to be shifted to the other side in the left-right direction, and
at least one of the electric box and the compressor faces the suction port via the outdoor heat exchanger.

9. The transport refrigeration unit according to any one of Claims 1 to 7,
wherein the casing includes
a lower plate that extends forward from the back plate,
a front plate that is located on a front side of the electric box,
a suction port that is provided in the front plate and through which air is introduced into the casing, and
an upper plate that faces the lower plate from above,
the transport refrigeration unit further comprises a fan that is provided on the upper plate and that discharges the air in the casing to an outside, and
an upper surface of the electric box is formed to be separated from the upper plate toward the front side.

10. A transport refrigeration unit comprising:
a casing; and
an electric box that is provided inside the casing and that accommodates electrical components,
wherein the casing includes
a back plate that is fixed to a front surface of a trailer,
a lower plate that extends forward from the back plate,
a front plate that is located on a front side of the electric box,
a suction port that is provided in the front plate and through which air is introduced into the casing, and
an upper plate that faces the lower plate from above,
the transport refrigeration unit further comprises a fan that is provided on the upper plate and that discharges the air in the casing to an outside, and
an upper surface of the electric box is formed to be separated from the upper plate toward the front side.

11. The transport refrigeration unit according to Claim 9 or 10, further comprising:
a compressor provided inside the casing; and
an outdoor heat exchanger that is disposed to face the suction port across the suction port,
wherein the electric box is disposed to be shifted to one side in a left-right direction,
the compressor is disposed to be shifted to the other side in the left-right direction, and
at least one of the electric box and the compressor faces the suction port via the outdoor heat exchanger.
